# EUROPÄISCHE PATENTANMELDUNG

(11) **EP 1 852 282 A1**
(43) Veröffentlichungstag der Anmeldung: **07.11.2007**
(21) Anmeldenummer: 07106850.6
(22) Anmeldetag: 24.04.2007
(51) Int. Cl.: B60D 1/00

(54) **Kupplung für Transportanhänger**

(30) Priorität: 05.05.2006 DE 102006020921
(71) Anmelder: LKE Gesellschaft für Logistik- und Kommunikations- Equipment MbH, 45768 Marl (DE)
(72) Erfinder: Gimmer, Dirk, 45699 Herten (DE)
(74) Vertreter: Cohausz & Florack

(57) **Zusammenfassung**

Um in beliebiger Anordnung Transportanhänger aneinander zu kuppeln, weist jeder Transportanhänger an seinen beiden Enden eine gleichartige Kupplung auf, die mit Montagesockel 1 an einem ersten Anhänger dauerhaft befestigbar ist und die auf dem Montagesockel 1 eine in einer vertikalen Ebene verschwenkbare, seitlich unverschwenkbare Deichsel 9 mit einer an deren freiem Ende angeordneten Steckaufnahme 9a für einen Steckbolzen 14 an einem anzukuppelnden zweiten Anhänger aufweist. Auf dem Montagesockel 1 ist ein Steckbolzen 13 gehalten, auf den eine Steckaufnahme 10a einer gleichartigen Kupplung des zweiten Anhängers steckbar ist und dem eine lösbare Verriegelung 15, 16 für die aufgesteckte Steckaufnahme 9a, 10a zugeordnet ist.

## Beschreibung

Die Erfindung betrifft eine Kupplung für zu einem Zug aneinander anzuhängende, lenkbare Transportanhänger, die eine auf einem Montagesockel in einer vertikalen Ebene verschwenkbare, seitlich aber unverschwenkbare Deichsel mit einer an deren freiem Ende angeordneten Steckaufnahme für einen Steckbolzen an einem anzukuppelnden zweiten Fahrzeug aufweist.

Um Güter von einem Ort zu einem anderen Ort zu transportieren, werden häufig mehrere zu einem Zug zusammengestellte Anhänger benutzt, die von einem Zugfahrzeug gezogen werden. Diese Anhänger sind lenkbar, insbesondere können sie an einem Ende Lenkrollen und am anderen Ende nicht lenkbare Rollen aufweisen. Um die Transportanhänger zu einem Zug zusammenzustellen, weisen sie jeweils an einem Ende eines Anhängers eine in der Horizontalen nicht verschwenkbare, aber hochklappbare Deichsel und am anderen Ende eines anderen Anhängers für das freie Ende der Deichsel des ersten Anhängers eine Steckaufnahme auf, die eine gelenkige Verbindung zwischen der Deichsel des einen Anhängers und der Steckaufnahme am anderen Anhänger ermöglicht (EP 1 506 885 A1) und dem Fahrzeug mit der Steckaufnahme ermöglicht. Um Kurven beim Durchfahren mit den Transportanhängern nicht zu schneiden, ist es üblich, den Zug so zusammenzustellen, dass der jeweils ziehende Transportanhänger die in der Horizontalen nicht verschwenkbare Deichsel aufweist. Das bedeutet, dass die Zusammenstellung herkömmlicher Transportanhänger zu einem solchen Zug nur bei entsprechend richtiger Orientierung der Transportanhänger möglich ist.

Die Steckaufnahme am anderen Anhänger muss nicht unmittelbar am anderen Anhänger angeordnet sein, sondern kann auch am Ende einer in der Horizontalen nicht verschwenkbaren aber hochklappbaren Deichsel am anderen Anhänger vorgesehen sein (CH 272 447). Auch in diesem Fall kommt es bei einer Zusammenstellung der Anhänger wegen der unterschiedlichen Deichsel an den beiden Enden des Anhängers auf die richtige Orientierung der Anhänger an.

Der Erfindung liegt die Aufgabe zugrunde, eine Kupplung für zu einem Zug zusammenzustellende lenkbare Transportanhänger zu schaffen, bei der es für eine Spurtreue des Zuges nicht darauf ankommt, in welcher Orientierung die einzelnen Anhänger zusammengestellt werden.

Diese Aufgabe wird erfindungsgemäß mit einer Kupplung der eingangs genannten Art dadurch gelöst, dass auf dem Montagesockel des ersten Anhängers zusätzlich zu der verschwenkbaren Deichsel ein Steckbolzen gehalten ist, auf den eine Steckaufnahme einer gleichartigen Kupplung des zweiten Anhängers steckbar ist und dem eine lösbare Verriegelung für die aufgesteckte Steckaufnahme zugeordnet ist.

Bei der erfindungsgemäßen Lösung sind an jedem Ende eines Transportanhängers gleichartige Kupplungen angeordnet. Dadurch ist es möglich, in Abhängigkeit von der vorgesehenen Zugeinrichtung der zu einen Zug zusammengestellten Transportanhänger von einer Kupplung entweder nur die Deichsel oder nur die Steckaufnahme zu nutzen. Der dafür betriebene konstruktive Aufwand ist vergleichsweise gering. Auch gestaltet sich das Ankuppeln sehr einfach, weil die Deichsel mit ihrer Steckaufnahme nur auf den Steckbolzen heruntergeschwenkt zu werden braucht. Die lösbare Verriegelung sichert die aufgesteckte Deichsel. Die dann von der Kupplung nicht benötigte andere Deichsel kann dann in eine das Ankuppeln der Deichsel in der gleichartigen Kupplung des anderen Fahrzeuges nicht störende Parkposition verschwenkt gehalten werden.

Wird die Deichsel nicht benötigt, dann wird sie vorzugsweise von einer Feder in ihrer Verschwenklage gehalten.

Ist die Deichsel mit ihrer Steckaufnahme auf den Steckbolzen gesteckt, dann lässt sich dieser an seinem freien Ende von einem am Montagesockel gelagerten Sperrglied verriegelt halten, das aus einer das freie Ende des Steckbolzens verschließenden Position in eine das freie Ende des Steckbolzens freigebende Position verstellbar ist. Dabei ist das Sperrglied vorzugsweise in Richtung seiner verschließenden Position durch eine Feder belastet. Diese Ausgestaltung erlaubt es auch, beim Ankuppeln der Deichsel die Verriegelung mittels der Deichsel zu lösen und sie mit ihrer Steckaufnahme auf den Steckbolzen zu stecken.

Eine zu dieser Ausgestaltung der Erfindung technisch äquivalente Lösung der Verriegelung besteht darin, dass die Verriegelung des Steckbolzens an seinem freien Ende von einem Montagesockel fixierten Sperrglied gebildet wird und der Steckbolzen aus einer sein freies Ende vom Sperrglied verschließenden Position in eine das freie Ende freigebende Position verstellbar ist. Wie bei der ersten Ausgestaltung kann auch in diesem Fall das bewegliche Element, hier der Steckbolzen, in Richtung seiner verschließenden Position durch eine Feder vorbelastet sein.

Im Folgenden wird die Erfindung anhand einer ein Ausführungsbeispiel darstellenden Zeichnung näher erläutert. Im Einzelnen zeigen:
- Fig. 1: zwei miteinander verbundene gleichartige Kupplungen in perspektivischer Darstellung,

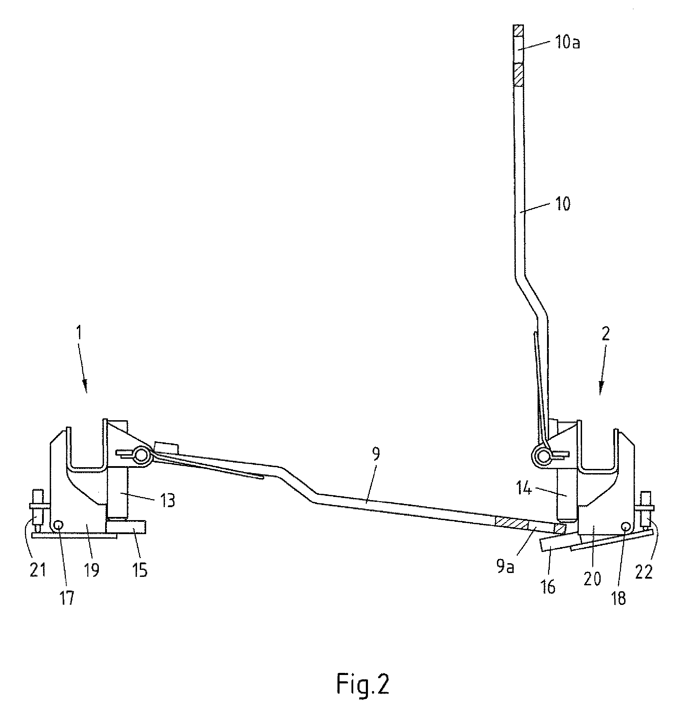

- Fig. 2: die beiden Kupplungen gemäß Fig. 1 in Seitenansicht und teilweise im Vertikalschnitt in der Phase des Ankuppelns und
- Fig. 3: die beiden Kupplungen gemäß Fig. 1 in Seitenansicht und teilweise im Vertikalschnitt im gekuppelten Zustand.

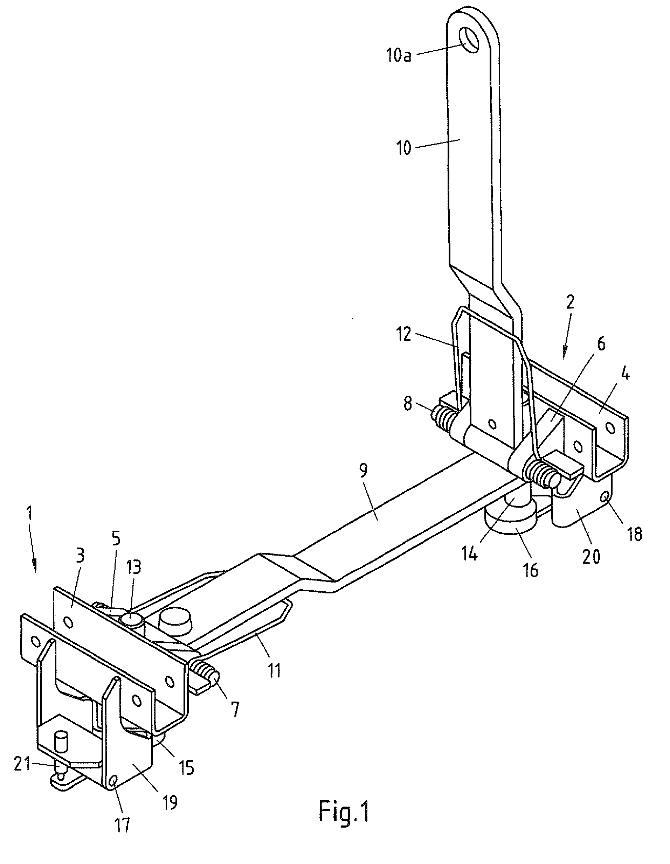

Die beiden gleichartigen Kupplungen weisen jeweils einen Montagesockel 1, 2 auf, der mittels eines U-Profils 3, 4 die Befestigung der Kupplung an einem nicht dargestellten quadratischen Profil eines Transportanhängers ermöglicht. Vorderseitig am Montagesockel 1, 2 sind ein paar Lagerböcke 5, 6 vorgesehen, in denen mittels eines Lagerzapfens 7, 8 eine Deichsel 9, 10 in einer vertikalen Ebene verschwenkbar gelagert ist. Die Deichsel 9, 10 wird von einer Feder 11, 12 in Richtung ihrer in Fig. 1 rechts dargestellten, hochgeklappten Position belastet.

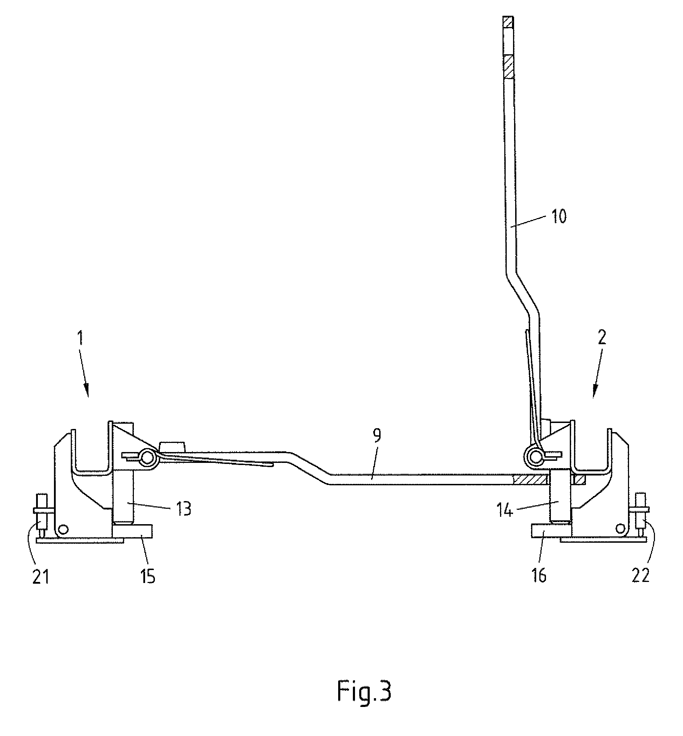

Vorderseitig am Montagesockel 1, 2 ist ein Steckbolzen 13, 14 fixiert. Das freie Ende dieses Steckbolzens 13, 14 wird von einem Sperrglied 15, 16 verschlossen gehalten, das mittels eines Lagerzapfens 17, 18 in einem Lagerbock 19, 20 des Montagesockels 3 verschwenkbar gelagert ist. Durch eine am Montagesockel 1, 2 abgestützte Feder 21, 22 in Form eines Federstiftes ist das Sperrglied 15, 16 in Richtung seiner in Fig. 1 und 3 dargestellten Schließstellung vorbelastet.

Um zwei Anhänger aneinander zu kuppeln, bieten die gleichartigen Kupplungen zwei Möglichkeiten an. Entweder erfolgt die Verbindung über die Deichsel 9 oder über die Deichsel 10. Welche Deichsel benutzt wird, hängt davon ab, welche Kupplung sich am ziehenden Anhänger befindet. Im dargestellten Ausführungsbeispiel ist dies die links dargestellte Kupplung. Um die beiden Fahrzeuge aneinander zu kuppeln, wird die Deichsel 9 gegen die Kraft der Feder 11 herunter geschwenkt. Mit ihrem vorderen Ende wird das Sperrglied 16 gegen die Kraft der es belastenden Feder 22 soweit herunter geschwenkt, dass der Steckbolzen 14 frei gegeben wird und dann die Deichsel 9 mit ihrer Steckaufnahme auf den Steckbolzen 14 gesteckt werden kann. Dann schließt das Sperrglied 16 wieder das freie Ende des Steckbolzens 14, so dass Zugkraft über die Deichsel 9 übertragen werden kann.

Es versteht sich, dass in technischer äquivalenter Weise die Verhältnisse von Steckbolzen 13, 14 und Sperrglied 15, 16 auch umgekehrt sein können, also das Sperrglied 15, 16 unverschwenkbar ist, dafür aber der Steckbolzen 13, 14 gegen Federkraft verschiebbar ist.

## Patentansprüche

1. Kupplung für zu einem Zug aneinander anzuhängende, lenkbare Transportanhänger, die mit einem Montagesockel (1, 2) an einem ersten Fahrzeug dauerhaft befestigbar ist und die auf dem Montagesockel (1, 2) eine in einer vertikalen Ebene verschwenkbare, seitlich unverschwenkbare Deichsel (9, 10) mit einer an deren freiem Ende angeordneten Steckaufnahme (9a, 10a) für einen Steckbolzen (13, 14) an einem anzukuppelnden zweiten Anhänger aufweist,
**dadurch gekennzeichnet , dass**
auf dem Montagesockel (1, 2) des ersten Anhängers zusätzlich zu der verschwenkbaren Deichsel(9, 10) ein Steckbolzen (13, 14) gehalten ist, auf den eine Steckaufnahme (9a, 10a) einer gleichartigen Kupplung des zweiten Anhängers steckbar ist und dem eine lösbare Verriegelung (15, 16) für die aufgesteckte Steckaufnahme (9a, 10a) zugeordnet ist.

2. Kupplung nach Anspruch 1,
**dadurch gekennzeichnet , dass**
die Deichsel (9, 10) von einer Feder (11, 12) in Richtung ihrer hochverschwenkten Lage vorbelastet ist.

3. Kupplung nach Anspruch 1 oder 2,
**dadurch gekennzeichnet , dass**
die Verriegelung des am Montagesockel (1, 2) fixierten Steckbolzens (13, 14) an seinem freien Ende von einem am Montagesockel (1, 2) gelagerten Sperrglied (15, 16) gebildet wird, das aus einer das freie Ende des Steckbolzens (13, 14) verschließenden Position in eine das freie Ende des Steckbolzens (13, 14) freigebende Position verstellbar ist.

4. Kupplung nach Anspruch 3,
**dadurch gekennzeichnet , dass**
das Sperrglied (15, 16) in Richtung seiner verschließenden Position durch eine Feder (21, 22) vorbelastet ist.

5. Kupplung nach Anspruch 1 oder 2,
**dadurch gekennzeichnet , dass**
die Verriegelung des Steckbolzens an seinem freien Ende von einem am Montagesockel fixierten Sperrglied gebildet wird und der Steckbolzen aus einer sein freies Ende vom Sperrglied verschließenden Position in eine das freie Ende des freigebenden Position verstellbar ist.

6. Kupplung nach einem der Anspruch 5,
**dadurch gekennzeichnet , dass**
der Steckbolzen in Richtung seiner verschließenden Position durch eine Feder vorbelastet ist.
